(19) Europäisches Patentamt European Patent Office Office européen des brevets

(11) **EP 2 990 438 B1**

(12) **EUROPEAN PATENT SPECIFICATION**

(45) Date of publication and mention
of the grant of the patent:
**01.04.2020 Bulletin 2020/14**

(21) Application number: **14787701.3**

(22) Date of filing: **25.04.2014**

(51) Int Cl.:
*C08L 13/00* (2006.01)       *C08K 3/04* (2006.01)
*C08K 5/17* (2006.01)        *C08L 95/00* (2006.01)
*C09K 3/10* (2006.01)        *C08K 5/12* (2006.01)
*C08L 9/02* (2006.01)        *C08J 3/24* (2006.01)

(86) International application number:
**PCT/JP2014/061672**

(87) International publication number:
**WO 2014/175415 (30.10.2014 Gazette 2014/44)**

(54) **NITRILE RUBBER COMPOSITION, CROSSLINKABLE RUBBER COMPOSITION, AND CROSSLINKED RUBBER PRODUCT**

NITRILKAUTSCHUKZUSAMMENSETZUNG, VERNETZBARE NITRILKAUTSCHUKZUSAMMENSETZUNG UND VERNETZTES KAUTSCHUKPRODUKT

COMPOSITION DE CAOUTCHOUC NITRILE, COMPOSITION DE CAOUTCHOUC RÉTICULABLE ET PRODUIT DE CAOUTCHOUC RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2013 JP 2013093776**

(43) Date of publication of application:
**02.03.2016 Bulletin 2016/09**

(73) Proprietor: **Zeon Corporation**
**Tokyo 100-8246 (JP)**

(72) Inventor: **FUKUMINE, Yoshio**
**Tokyo 100-8246 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
EP-A1- 2 161 301         WO-A1-2005/030859
WO-A1-2007/072900        WO-A1-2010/087431
WO-A1-2012/133618        JP-A- 2001 055 471
JP-A- 2003 119 320        JP-A- 2003 246 976
JP-A- 2003 322 262        JP-A- 2006 213 743

• **Anonymous: "Coal Fillers Incorporated--->Markets", , 23 June 2007 (2007-06-23), XP055313599, Retrieved from the Internet: URL:https://web.archive.org/web/20070623084152/http://www.rubberworld.com/coalfillers/market.htm [retrieved on 2016-10-25]**

## Description

TECHNICAL FIELD

The present invention relates to a nitrile rubber composition, cross-linkable rubber composition, and cross-linked rubber, more particularly relates to a nitrile rubber composition able to give a cross-linked rubber which is excellent in normal physical properties and further is superior in compression set resistance and oil resistance and a cross-linkable rubber composition and cross-linked rubber which are obtained using the nitrile rubber composition.

BACKGROUND ART

In the past, nitrile rubber (acrylonitrile-butadiene copolymer rubber), taking advantage of its oil resistance, mechanical characteristics, chemical resistance, etc., has been used as a material for hoses, tubes, and other automobile-use rubber parts. Further, hydrogenated nitrile rubber (hydrogenated acrylonitrile-butadiene copolymer rubber) which is obtained by hydrogenating the carbon-carbon double bonds in the polymer main chain of nitrile rubber is further excellent in heat resistance, so is used for belts, hoses, diaphragms, and other rubber parts.

As such a nitrile rubber composition, for example, in Patent Document 1, a nitrile rubber composition which contains a hydrogenated nitrile rubber which has $\alpha,\beta$-ethylenically unsaturated dicarboxylic acid monoester monomer units, a polyamine-based cross-linking agent, and a basic cross-linking accelerator has been proposed. Further, in Patent Document 1, to improve the mechanical strength or oil resistance of a cross-linked product obtained by cross-linking a nitrile rubber composition, a filler constituted by SRF carbon black is mixed in. However, when using a filler constituted by SRF carbon black, depending on the type of oil used, sometimes the increasingly higher demands for oil resistance cannot be sufficiently met.

Non-Patent Literature 1 merely discloses applications of Austin Black 325 as bituminous coal filler, types of polymer which can be used in combinat ion with Austin Black 325, advantages and markets of Austin Black 325.

Patent Document 2 discloses a rubber composition containing EPDM, carb on black, bituminous coal fine powder and organic peroxide. According to the rubber composition disclosed in Patent Document 2, a cross-linked rubber wh ich is improved in normal physical properties and compression set at a certai n extent can be obtained, but there are problems that the cross-linked rubber is poor in resistance to oil and resistance to fuel oil.

Patent Document 3 discloses a highly saturated nitrile rubber composit ion obtained by using a carboxyl group-containing highly saturated nitrile r ubber and a highly saturated nitrile rubber in specific ratio in combination, and compounding a polyamide resin into this.

According to the highly saturated nitrile rubber composition disclosed in Patent Document 3, a cross-linked rubber which is improved in normal physical properties and resistance to fuel oil at a certain extent can be obtained, but there are problems that resistance to lubricating oil is insufficient depending on type of lubricating oil.

PRIOR ART DOCUMENTS

PATENT DOCUMENTS

Patent Document 1: Japanese Patent Publication No. 2001-55471A
Patent Document 2: EP 2 161 301 A1
Patent Document 3: WO 2012/133618 A1

NON-PATENT LITERATURE

Non-Patent Literature 1: Anonymous: "Coal Fillers Incorporated ---Markets", 23 June 2007

SUMMARY OF THE INVENTION

PROBLEM TO BE SOLVED BY THE INVENTION

The present invention has as its object the provision of a nitrile rubber composition which can give a cross-linked rubber which is excellent in normal physical properties and further is superior in compression set resistance and oil resistance (in particular, oil resistance to lubricating oil and fuel oil). Further, the present invention has as its object the provision of a cross-linkable rubber composition which is obtained using such a nitrile rubber composition and cross-linked rubber obtained by cross-linking this cross-linkable rubber composition.

## MEANS FOR SOLVING THE PROBLEMS

The inventors engaged in intensive research to solve this problem and as a result discovered that the above objects can be achieved by a nitrile rubber composition containing a carboxyl group-containing nitrile rubber with an iodine value of 120 or less into which bituminous coal is mixed and thereby completed the present invention.

That is, according to the present invention, there is provided a nitrile rubber composition containing a carboxyl group-containing nitrile rubber (A) with an iodine value of 120 or less and bituminous coal (B).

The bituminous coal (B) preferably has a carbon purity of 60 to 95 wt%.

The bituminous coal (B) preferably has a volume average particle size of 2 to 10 $\mu$m.

The carboxyl group-containing nitrile rubber (A) preferably contains $\alpha,\beta$-ethylenically unsaturated nitrile monomer units, carboxyl group-containing monomer units, conjugated diene monomer units, and (meth)acrylic acid alkoxyalkyl ester monomer units.

An amount of the bituminous coal (B) is preferably 50 to 300 parts by weight with respect to 100 parts by weight of the carboxyl group-containing nitrile rubber (A).

Further, according to the present invention, there is provided a cross-linkable rubber composition containing the nitrile rubber composition into which a cross-linking agent (C) is mixed, as the cross-linking agent (C), a polyamine cross-linking agent is preferable.

The cross-linkable rubber composition of the present invention preferably further contains a basic cross-linking accelerator.

The cross-linkable rubber composition of the present invention preferably further contains a plasticizer.

Furthermore, according to the present invention, there is provided a cross-linked rubber obtained by cross-linking the cross-linkable rubber composition. The cross-linked rubber of the present invention is preferably a seal member.

## EFFECTS OF THE INVENTION

According to the present invention, there are provided a nitrile rubber composition which can give cross-linked rubber which is excellent in normal physical properties and further is excellent in compression set resistance and oil resistance (in particular, oil resistance to lubricating oil and fuel oil) and a cross-linkable rubber composition which contains the nitrile rubber composition and cross-linked rubber which is obtained by cross-linking this cross-linkable rubber composition and has the above characteristics.

## DESCRIPTION OF EMBODIMENTS

Nitrile Rubber Composition

A nitrile rubber composition of the present invention contains a carboxyl group-containing nitrile rubber (A) with an iodine value of 120 or less and bituminous coal (B).

Carboxyl Group-Containing Nitrile Rubber (A)

First, the carboxyl group-containing nitrile rubber (A) with an iodine value of 120 or less used in the present invention will be explained. The carboxyl group-containing nitrile rubber (A) with an iodine value of 120 or less used in the present invention (below, simple referred to as the "carboxyl group-containing nitrile rubber (A)") is rubber with an iodine value of 120 or less which is obtained by copolymerizing an $\alpha,\beta$-ethylenically unsaturated nitrile monomer, a carboxyl group-containing monomer, and a copolymerizable other monomer which is added as needed.

The $\alpha,\beta$-ethylenically unsaturated nitrile monomer is not particularly limited so long as an $\alpha,\beta$-ethylenically unsaturated compound which has nitrile groups. For example, acrylonitrile; $\alpha$-chloroacrylonitrile, $\alpha$-bromoacrylonitrile, and other $\alpha$-halogenoacrylonitriles; methacrylonitrile and other $\alpha$-alkylacrylonitriles; etc. may be mentioned. Among these as well, acrylonitrile and methacrylonitrile are preferable, while acrylonitrile is more preferable. The $\alpha,\beta$-ethylenically unsaturated nitrile monomer may be used as a single type alone or as a plurality of types together.

The content of the $\alpha,\beta$-ethylenically unsaturated nitrile monomer units is preferably 5 to 60 wt% with respect to the total monomer units, more preferably 8 to 40 wt%, furthermore preferably 10 to 30 wt%. If the content of the $\alpha,\beta$-ethylenically unsaturated nitrile monomer units is too small, the obtained cross-linked rubber is liable to fall in oil resistance, while conversely if too large, it may fall in cold resistance.

The carboxyl group-containing monomer is not particularly limited so long as a monomer which can be copolymerized with the α,β-ethylenically unsaturated nitrile monomer and which has at least one unsubstituted (free) carboxyl group which is not esterified etc. By using a carboxyl group-containing monomer, it is possible to introduce a carboxyl group into the nitrile rubber. Due to this, it is possible to make the obtained cross-linked rubber one which is excellent in elongation or other mechanical characteristics and further is more excellent in compression set resistance.

As the carboxyl group-containing monomer which is used in the present invention, for example, an α,β-ethylenically unsaturated monocarboxylic acid monomer, α,β-ethylenically unsaturated polyvalent carboxylic acid monomer, α,β-ethylenically unsaturated dicarboxylic acid monoester monomer, etc. may be mentioned. Further, the carboxyl group-containing monomers also includes a monomer in which the carboxyl groups of these monomers form carboxylates. Furthermore, an anhydride of an α,β-ethylenically unsaturated polyvalent carboxylic acid also causes the acid anhydride groups to cleave apart after copolymerization to form carboxyl groups, so can be used as a carboxyl group-containing monomers.

As the α,β-ethylenically unsaturated monocarboxylic acid monomer, acrylic acid, methacrylic acid, ethylacrylic acid, crotonic acid, cinnamic acid, etc. may be mentioned.

As the α,β-ethylenically unsaturated polyvalent carboxylic acid monomer, fumaric acid, maleic acid and other butenedioic acids, itaconic acid, citraconic acid, mesaconic acid, glutaconic acid, allylmalonic acid, tetraconic acid, etc. may be mentioned. Further, as anhydrides of α,β-unsaturated polyvalent carboxylic acids, maleic anhydride, itaconic anhydride, citraconic anhydride, etc. may be mentioned.

As the α,β-ethylenically unsaturated dicarboxylic acid monoester monomer, monomethyl maleate, monoethyl maleate, monopropyl maleate, mono n-butyl maleate, and other maleic acid monoalkyl esters; monocyclopentyl maleate, monocyclohexyl maleate, monocycloheptyl maleate, and other maleic acid monocycloalkyl esters; monomethylcyclopentyl maleate, monoethylcyclohexyl maleate, and other maleic acid monoalkylcycloalkyl esters; monomethyl fumarate, monoethyl fumarate, monopropyl fumarate, mono n-butyl fumarate, and other fumaric acid monoalkyl esters; monocyclopentyl fumarate, monocyclohexyl fumarate, monocycloheptyl fumarate, and other fumaric acid monocycloalkyl esters; monomethylcyclopentyl fumarate, monoethylcyclohexyl fumarate, and other fumaric acid monoalkylcycloalkyl esters; monomethyl citraconate, monoethyl citraconate, monopropyl citraconate, mono n-butyl citraconate, and other citraconic acid monoalkyl esters; monocyclopentyl citraconate, monocyclohexyl citraconate, monocycloheptyl citraconate, and other citraconic acid monocycloalkyl esters; monomethylcyclopentyl citraconate, monoethylcyclohexyl citraconate, and other citraconic acid monoalkylcycloalkyl esters; monomethyl itaconate, monoethyl itaconate, monopropyl itaconate, mono n-butyl itaconate, and other itaconic acid monoalkyl esters; monocyclopentyl itaconate, monocyclohexyl itaconate, monocycloheptyl itaconate, and other itaconic acid monocycloalkyl esters; monomethylcyclopentyl itaconate, monoethylcyclohexyl itaconate, and other itaconic acid monoalkylcycloalkyl esters; etc. may be mentioned.

The carboxyl group-containing monomer may be used as a single type alone or as a plurality of types together. Among these as well, since the effects of the present invention become much more remarkable, an α,β-ethylenically unsaturated dicarboxylic acid monoester monomer is preferable, a maleic acid monoalkyl ester and fumaric acid monoalkyl ester are more preferable, a maleic acid monoalkyl ester is furthermore preferable, and mono-n-butyl maleate is particularly preferable. Note that, as the number of carbon atoms of the alkyl group of the alkyl ester, 2 to 8 is preferable.

The content of the carboxyl group-containing monomer units is preferably 0.1 to 20 wt% with respect to the total monomer units, more preferably 0.2 to 15 wt%, furthermore preferably 0.5 to 10 wt%. If the content of the carboxyl group-containing monomer units is too small, the obtained cross-linked rubber is liable to deteriorate in mechanical strength and compression set resistance. On the other hand, if too large, the scorch stability when adding a cross-linking agent and making into a cross-linkable rubber composition is liable to deteriorate and the obtained cross-linked rubber is liable to fall in fatigue resistance.

Further, the carboxyl group-containing nitrile rubber (A) used in the present invention preferably also contains a conjugated diene monomer so that the obtained cross-linked rubber has a rubber elasticity.

As the conjugated diene monomer which forms the conjugated diene monomer units, 1,3-butadiene, isoprene, 2,3-dimethyl-1,3-butadiene, 1,3-pentadiene, chloroprene, and other conjugated diene monomers containing 4 to 6 carbon atoms are preferable, 1,3-butadiene and isoprene are more preferable, and 1,3-butadiene is particularly preferable. The conjugated diene monomer may be used as a single type alone or as a plurality of types together.

The content of the conjugated diene monomer units (including hydrogenated parts) is preferably 20 to 83.9 wt%, with respect to the total monomer units, more preferably 25 to 81.8 wt%, furthermore preferably 30 to 68.5 wt%. If the content of the conjugated diene monomer units is too small, the obtained cross-linked rubber is liable to fall in rubber elasticity, while conversely if too large, the heat resistance or chemical resistance stability may be impaired.

Further, the carboxyl group-containing nitrile rubber (A) used in the present invention preferably further contains, from the viewpoint of the obtained cross-linked rubber being further improved in oil resistance, (meth)acrylic acid alkoxyalkyl ester monomer units (meaning "methacrylic acid alkoxyalkyl ester monomer units and acrylic acid alkoxyalkyl ester monomer units", same below).

The (meth)acrylic acid alkoxyalkyl ester monomer which forms the (meth)acrylic acid alkoxyalkyl ester monomer units is not particularly limited so long as an ester compound of an acrylic acid or methacrylic acid and an alcohol which has an alkoxyalkyl group. As such a (meth)acrylic acid alkoxyalkyl ester monomer, methoxymethyl (meth)acrylate, methoxyethyl (meth)acrylate, ethoxymethyl (meth)acrylate, ethoxyethyl (meth)acrylate, n-propoxyethyl (meth)acrylate, i-propoxyethyl (meth)acrylate, n-butoxyethyl (meth)acrylate, i-butoxyethyl (meth)acrylate, t-butoxyethyl (meth)acrylate, methoxypropyl (meth)acrylate, methoxybutyl (meth)acrylate, etc. may be mentioned. Among these as well, a compound with alkoxyalkyl group having 2 to 6 carbon atoms is preferable, one having 2 to 4 is more preferable, methoxyethyl acrylate and ethoxyethyl acrylate are more preferable, and methoxyethyl acrylate is particularly preferable.

The content of the (meth)acrylic acid alkoxyalkyl ester monomer units is preferably 0 to 50 wt% with respect to the total monomer units, more preferably 10 to 50 wt%, furthermore preferably 21 to 50 wt%. If the content of (meth)acrylic acid alkoxyalkyl ester monomer units is too small, the obtained cross-linked rubber tends to fall in oil resistance and cold resistance. On the other hand, if the content is too large, the obtained cross-linked rubber tends to fall in fatigue resistance and sliding wear.

Further, the carboxyl group-containing nitrile rubber (A) used in the present invention may be a copolymer of the above monomers and another copolymerizable monomer. As such another monomer, ethylene, an $\alpha$-olefin monomer, aromatic vinyl monomer, fluorine-containing vinyl monomer, etc. may be mentioned.

As the $\alpha$-olefin monomer, a one having 3 to 12 carbon atoms is preferable. For example, propylene, 1-butene, 4-methyl-1-pentene, 1-hexene, 1-octene, etc. may be mentioned.

As the aromatic vinyl monomer, for example, styrene, $\alpha$-methylstyrene, vinylpyridine, etc. may be mentioned.

As the fluorine-containing vinyl monomer, for example, fluoroethylvinyl ether, fluoropropylvinyl ether, o-trifluoromethylstyrene, vinyl pentafluorobenzoate, difluoroethylene, tetrafluoroethylene, etc. may be mentioned.

The other copolymerizable monomers may also be used as a plurality of types together. The content of the units of the other monomers is preferably 50 wt% or less with respect to the total monomer units, more preferably 30 wt% or less, furthermore preferably 10 wt% or less.

The carboxyl group-containing nitrile rubber (A) used in the present invention has an iodine value of 120 or less, preferably 60 or less, more preferably 40 or less, particularly preferably 30 or less. If the carboxyl group-containing nitrile rubber (A) is too high in iodine value, the obtained cross-linked rubber is liable to fall in heat resistance and ozone resistance.

Further, the carboxyl group-containing nitrile rubber (A) used in the present invention has a polymer Mooney viscosity ($ML_{1+4}$, 100°C) of preferably 15 to 200, more preferably 15 to 150, furthermore preferably 15 to 100. If the carboxyl group-containing nitrile rubber (A) has too low a polymer Mooney viscosity, the obtained cross-linked rubber is liable to fall in mechanical characteristics, while conversely too high, the processability when adding a cross-linking agent and making into a cross-linkable rubber composition may fall.

The content of the carboxyl group of the carboxyl group-containing nitrile rubber (A) used in the present invention, that is, the number of moles of the carboxyl group per 100 g of the carboxyl group-containing nitrile rubber (A), is preferably $5 \times 10^{-4}$ to $5 \times 10^{-1}$ ephr, more preferably $1 \times 10^{-3}$ to $1 \times 10^{-1}$ ephr, particularly preferably $5 \times 10^{-3}$ to $6 \times 10^{-2}$ ephr. If the content of the carboxyl group of the carboxyl group-containing nitrile rubber (A) is too small, the obtained cross-linked rubber is liable to fall in mechanical strength, while if too large, it may fall in cold resistance.

The method of production of the carboxyl group-containing nitrile rubber (A) used in the present invention is not particularly limited, but it is preferable to use emulsion polymerization using an emulsifying agent to copolymerize the above monomers to prepare a latex of copolymer rubber and hydrogenate this. At the time of emulsion polymerization, an emulsifying agent, polymerization initiator, molecular weight adjuster, or other usually used secondary polymerization material may be used.

The emulsifying agent is not particularly limited, but, for example, polyoxyethylenealkyl ether, polyoxyethylenealkylphenol ether, polyoxyethylenealkyl ester, polyoxyethylenesorbitanalkyl ester, and other nonionic emulsifying agent; a salt of myristic acid, palmitic acid, oleic acid, linoleic acid, and other fatty acid, sodium dodecylbenzene sulfonate and other alkylbenzene sulfonate, higher alcohol sulfuric ester salt, alkyl sulfosuccinic acid salt, and other anionic emulsifying agent; sulfoester of $\alpha,\beta$-unsaturated carboxylic acid, sulfate ester of $\alpha,\beta$-unsaturated carboxylic acid, sulfoalkyl arylether, and other copolymerizable emulsifying agent; etc. may be mentioned. The amount of use of the emulsifying agent is preferably 0.1 to 10 parts by weight with respect to 100 parts by weight of the total monomers.

The polymerization initiator is not particularly limited if a radical initiator, but potassium persulfate, sodium persulfate, ammonium persulfate, potassium perphosphate, hydrogen peroxide, and other inorganic peroxides; t-butyl peroxide, cumen hydroperoxide, p-mentane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butyl peroxyisobutyrate, and other organic peroxides; azobisisobutyronitrile, azobis-2,4-dimethyl valeronitrile, azobiscyclohexane carbonitrile, methyl azobisisobutyrate, and other azo compounds; etc. may be mentioned. The polymerization initiator may be used alone or as two types or more combined. As the polymerization initiator, an inorganic or organic peroxide is preferable. When using the peroxide as the polymerization initiator, it may be combined with sodium hydrogen sulfite, ferrous sulfate, and other reducing agents for use as a redox-based polymerization initiator. The amount of use of the polymerization initiator is preferably 0.01 to 2 parts by weight with respect to 100 parts by weight of the total monomers.

The molecular weight adjuster is not particularly limited, but t-dodecyl mercaptan, n-dodecyl mercaptan, octyl mercaptan, and other mercaptans; carbon tetrachloride, methylene chloride, methylene bromide, and other halogenated hydrocarbon; $\alpha$-methylstyrene dimer; tetraethylthiuram disulfide, dipentamethylene thiuram disulfide, diisopropyl xantogen disulfide, and other sulfur-containing compounds etc. may be mentioned. These may be used alone or in two or more types combined. Among these as well, mercaptans are preferable, and t-dodecyl mercaptan is more preferable. The amount of use of the molecular weight adjuster is preferably 0.1 to 0.8 parts by weight with respect to 100 parts by weight of the total monomers.

For the medium of the emulsion polymerization, usually water is used. The amount of water is preferably 80 to 500 parts by weight with respect to 100 parts by weight of the total monomers.

Further, at the time of emulsion polymerization, further, in accordance with need, a stabilizer, dispersant, pH adjuster, deoxidant, particle size adjuster, and other secondary polymerization material may be used. In the case of using these, the types and amounts of use are also not particularly limited.

Further, by selectively hydrogenating the double bonds of the conjugated diene monomer units of the obtained copolymer, it is possible to produce a carboxyl group-containing nitrile rubber (A). Note that, the type and amount of the hydrogenation catalyst which is used for the hydrogenation, the hydrogenation temperature, etc. may be determined based on known methods.

Bituminous Coal (B)

The nitrile rubber composition of the present invention contains bituminous coal (B) in addition to the above-mentioned carboxyl group-containing nitrile rubber (A). In the present invention, by mixing the bituminous coal (B) into the above-mentioned carboxyl group-containing nitrile rubber (A), when cross-linking the rubber and making into the cross-linked rubber, it is possible to maintain good normal physical properties while making the compression set resistance excellent. Further, it is possible to improve the oil resistance, in particular, oil resistance to lubricating oil and the oil resistance to fuel oil. In particular, according to the present invention, by mixing the bituminous coal (B), for example, it is possible to realize an excellent oil resistance even when mixing in a relatively large amount of plasticizer in order to improve the cold resistance.

The bituminous coal (B) used in the present invention is a type of coal. In the classification of coal prescribed in the JIS M1002, it is classified as "$B_1$", "$B_2$", or "C". For example, caking coal, non-caking coal, etc. may be mentioned.

The carbon purity (content of carbon) of the bituminous coal (B) used in the present invention is usually 60 to 95 wt%, preferably 70 to 90 wt%, more preferably 70 to 85 wt%. By the carbon purity being in that range, the effect of addition of the bituminous coal (B) can be made more remarkable. Note that the carbon purity of the bituminous coal (B) can, for example, be found by measurement of volatiles based on ASTM D3175, measurement of heat loss based on ASTM D3302, measurement of ash content based on ASTM D3174, etc.

Further, the bituminous coal (B) used in present invention may be a particle shape, while not particularly limited, a volume average particle size of 2 to 10 $\mu$m in range is preferable, of 3 to 9 $\mu$m in range is more preferable, and of 4 to 8 $\mu$m in range is particularly preferable. If the bituminous coal (B) is too small in volume average particle size, the processability is liable to deteriorate, while if the bituminous coal (B) is too large in volume average particle size, the normal physical properties are liable to deteriorate. Note that the volume average particle size of the bituminous coal (B) can, for example, be measured by the light scattering method using a light scattering diffraction particle size measuring device.

Furthermore, the bituminous coal (B) used in the present invention has a specific gravity, while depending on the carbon purity, of preferably 0.5 to 2, more preferably 1 to 2, furthermore preferably 1 to 1.5.

In the nitrile rubber composition of the present invention, the amount of the bituminous coal (B) is preferably 50 to 300 parts by weight with respect to 100 parts by weight of the carboxyl group-containing nitrile rubber (A), more preferably 75 to 200 parts by weight, furthermore preferably 80 to 150 parts by weight. If the amount of the bituminous coal (B) is too small, the effect of mixing in the bituminous coal (B), that is, the effect of improvement of the compression set resistance and oil resistance, becomes harder to obtain, while if the amount of the bituminous coal (B) is too large, the normal physical properties are liable to deteriorate.

Cross-Linkable Rubber Composition

A cross-linkable rubber composition of the present invention comprises the above-mentioned nitrile rubber composition containing a carboxyl group-containing nitrile rubber (A) and bituminous coal (B) into which a cross-linking agent (C) is mixed.

The cross-linking agent (C) used in the present invention is not particularly limited so long as one able to cross-link the above-mentioned carboxyl group-containing nitrile rubber (A). A sulfur cross-linking agent, organic peroxide cross-linking agent, polyamine cross-linking agent, etc. may be mentioned. Among these, since the effects of the present invention become much more remarkable, the polyamine cross-linking agent is preferable.

The polyamine cross-linking agent (C) used in the present invention is not particularly limited so long as being a compound which has two or more amino groups or a compound of a form which has two or more amino groups at the time of cross-linking, but a compound of an aliphatic hydrocarbon or aromatic hydrocarbon with its plurality of hydrogen atoms substituted by amino groups or hydrazide structures (structures expressed by -CONHNH$_2$, where CO indicates a carbonyl group) and a compound of a form which becomes that at the time of cross-linking are preferable. As specific examples, hexamethylenediamine, hexamethylenediamine carbamate, tetramethylenepentamine, hexamethylenediaminecinnamaldehyde adducts, hexamethylenediaminedibenzoate salts, and other aliphatic polyvalent amines; 2,2-bis{4-(4-aminophenoxy)phenyl}propane, 4,4'-methylenedianiline, m-phenylenediamine, p-phenylenediamine, 4,4'-methylenebis(o-chloroaniline), and other aromatic polyvalent amines; dihydrazide isophthalate, dihydrazide adipate, dihydrazide sebacate, and other compounds which have two or more hydrazide structures; etc. may be mentioned. Among these as well, hexamethylenediamine carbamate is particularly preferable.

In the cross-linkable rubber composition of the present invention, the amount of the cross-linking agent is preferably 0.1 to 20 parts by weight with respect to 100 parts by weight of the carboxyl group-containing nitrile rubber (A), more preferably 0.2 to 15 parts by weight, furthermore preferably 0.5 to 10 parts by weight. If the amount of the cross-linking agent (C) is too small, the obtained cross-linked rubber is liable to deteriorate in mechanical properties and compression set resistance. On the other hand, if too large, the obtained cross-linked rubber may deteriorate in fatigue resistance.

Further, the cross-linkable rubber composition of the present invention preferably further contains a basic cross-linking accelerator. By further containing a basic cross-linking accelerator, the effects of the present invention become much more remarkable.

As specific examples of the basic cross-linking accelerator, tetramethylguanidine, tetraethylguanidine, diphenylguanidine, 1,3-di-o-tolylguanidine, and other tolylguanidines, o-tolylguanides, a di-o-tolylguanidine salt of dicatechol boric acid, and other guanidine-based basic cross-linking accelerators; n-butylaldehyde aniline, acetoaldehyde ammonia, and other aldehyde amine-based basic cross-linking accelerators; etc. may be mentioned. Among these as well, a guanidine-based basic cross-linking accelerator is preferable, while 1,3-di-o-tolylguanidine is particularly preferable.

In the cross-linkable rubber composition of the present invention, the amount of the basic cross-linking accelerator is preferably 0.1 to 20 parts by weight with respect to 100 parts by weight of the carboxyl group-containing nitrile rubber (A), more preferably 0.5 to 10 parts by weight, furthermore preferably 1 to 5 parts by weight. If the amount of the basic cross-linking accelerator is too small, sometimes the cross-linking speed of the cross-linkable rubber composition will become too slow and the cross-linking density will fall. On the other hand, if the amount is too large, the cross-linking speed of the cross-linkable rubber composition will become too fast and scorching will occur or the storage stability will be impaired.

Furthermore, the cross-linkable rubber composition of the present invention preferably further contains a plasticizer. By further containing a plasticizer, the cold resistance can be improved.

Such a plasticizer is not particularly limited, but dibutoxyethyl adipate, di(butoxyethoxyethyl) adipate, and other ester compounds of adipic acid and ether bond-containing alcohols; dibutoxyethyl azelate, di(butoxyethoxyethyl) azelate, and other ester compounds of azelaic acid and ether bond-containing alcohols; dibutoxyethyl sebacate, di(butoxyethoxyethyl) sebacate, and other ester compounds of sebacic acid and ether bond-containing alcohols; dibutoxyethyl phthalate, di(butoxyethoxyethyl) phthalate, and other ester compounds of phthalic acid and ether bond-containing alcohols; dibutoxyethyl isophthalate, di(butoxyethoxyethyl) isophthalate, and other ester compounds of isophthalic acid and ether bond-containing alcohols; di-(2-ethylhexyl) adipate, diisodecyl adipate, diisononyl adipate, dibutyl adipate, and other adipic acid dialkyl esters; di-(2-ethylhexyl) azelate, diisooctyl azelate, di-n-hexyl azelate, and other azelic acid dialkyl esters; di-n-butyl sebacate, di-(2-ethylhexyl) sebacate, and other sebacic acid dialkyl esters; dibutyl phthalate, di-(2-ethylhexyl) phthalate, di-n-octyl phthalate, diisobutyl phthalate, diheptyl phthalate, diisodecyl phthalate, diundecyl phthalate, diisononyl phthalate, and other phthalic acid dialkyl esters; dicyclohexyl phthalate and other phthalic acid dicycloalkyl esters; diphenyl phthalate, butylbenzyl phthalate, and other phthalic acid arylesters; di-(2-ethylhexyl) isophthalate, diisooctyl isophthalate, and other isophthalic acid dialkyl esters; di-(2-ethylhexyl) tetrahydrophthalate, di-n-octyl tetrahydrophthalate, diisodecyl tetrahydrophthalate, and other tetrahydrophthalic acid dialkyl esters; tri-(2-ethylhexyl) trimellitate, tri-n-octyl trimellitate, triisodecyl trimellitate, triisooctyl trimellitate, tri-n-hexyl trimellitate, triisononyl trimellitate, triisodecyl trimellitate, and other trimellitic acid derivatives; epoxidized soybean oil, epoxidized linseed oil, and other epoxy-based plasticizers; tricresyl phosphate and other phosphoric acid ester-based plasticizers; etc. may be mentioned. These may be used as single type alone or as a plurality of types together. Among these, from the viewpoint of being able to better improve the heat resistance, trimellitic acid derivatives are preferable, while tri-(2-ethylhexyl) trimellitate is more preferable.

In the cross-linkable rubber composition of the present invention, the amount of plasticizer is preferably 5 to 70 parts by weight with respect to 100 parts by weight of the carboxyl group-containing nitrile rubber (A), more preferably 15 to 50 parts by weight, furthermore preferably 20 to 40 parts by weight. As explained above, by mixing bituminous coal (B) in the present invention, it is possible to realize excellent oil resistance even when relatively increasing the amount of plasticizer. For this reason, by relatively increasing the amount of plasticizer, it is possible to further enhance the effect obtained by relatively increasing the amount of plasticizer, that is, the effect of improvement of the cold resistance, while making the oil resistance excellent.

Further, the cross-linkable rubber composition of the present invention may contain, in addition to the above ingredients, compounding agents which are normally used in the field of rubber, for example, calcium carbonate, clay and other nonreinforcing fillers, a cross-linking accelerator other than a basic cross-linking accelerator, a cross-linking aid, cross-linking retarder, antiaging agent, antioxidant, photo stabilizer, primary amine and other scorch preventer, processing aid, slip agent, tackifier, lubricant, flame retardant, antifungal agent, acid acceptor, antistatic agent, pigment, etc. The amounts of these compounding agents are not particularly limited so long as in ranges not impairing the objects and effects of the present invention. Amounts according to the purposes of inclusion may be employed.

Furthermore, the cross-linkable rubber composition of the present invention may also have mixed in it a rubber other than the above-mentioned carboxyl group-containing nitrile rubber (A) in a range where the effects of the present invention are not impaired. If mixing a rubber other than the carboxyl group-containing nitrile rubber (A), the amount in the cross-linkable rubber composition is preferably 30 parts by weight or less with respect to 100 parts by weight of the carboxyl group-containing nitrile rubber (A), more preferably 20 parts by weight or less, furthermore preferably 10 parts by weight or less.

The cross-linkable rubber composition of the present invention is prepared by mixing the above ingredients in a preferably non-aqueous system. The method of preparing the cross-linkable rubber composition of the present invention is not limited, but the composition is usually prepared by kneading the ingredients other than the cross-linking agent (C) and cross-linking aid which is unstable against heat by a Banbury mixer, internal mixer, kneader, or other mixer by primary kneading, then transferring the mixture to rolls etc., adding the cross-linking agent (C) and cross-linking aid which is unstable against heat, and kneading them by secondary kneading.

The thus obtained cross-linkable rubber composition of the present invention has a compound Mooney viscosity $(ML_{1+4}, 100°C)$ of preferably 15 to 200, more preferably 20 to 175, furthermore preferably 25 to 150, and is excellent in processability.

Cross-Linked Rubber

A cross-linked rubber of the present invention is one obtained by cross-linking the above-mentioned cross-linkable rubber composition of the present invention.

The cross-linked rubber of the present invention can be produced by using the cross-linkable rubber composition of the present invention, for example, using a molding machine which corresponds to the desired shape, for example, an extruder, injection molding machine, press, rolls, etc. for molding, heating to cause a cross-linking reaction and thereby fixing the shape as a cross-linked product. In this case, it is possible to mold the rubber, then cross-link it and possible to cross-link it simultaneously with molding. The molding temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 6 hours.

Further, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is obtained using the above-mentioned nitrile rubber composition of the present invention, so is excellent in normal physical properties and further is superior in compression set resistance and oil resistance. In particular, the cross-linked rubber of the present invention exhibits an excellent oil resistance to lubricating oil and fuel oil and other of several types of oil.

For this reason, the cross-linked rubber of the present invention can be used, taking advantage of the above characteristics, for O-rings, packings, diaphragms, oil seals, shaft seals, bearing seals, wellhead seals, air compressor seals, seals for sealing the chlorofluorocabon or fluorohydrocarbons or carbon dioxide used for cooling apparatuses of air-conditioners or compressors for cooling machines for air-conditioning systems, seals for sealing supercritical carbon dioxide or subcritical carbon dioxide used for washing media for precision washing, seals for roller devices (roller bearings, automobile hub units, automobile water pumps, linear guide devices, ball and screws, etc.), valves and valve seats, BOP (blow out preventers), blatters, and other various sealing members; and intake manifold gaskets attached to connecting parts of intake manifolds and cylinder heads, cylinder head gaskets attached to connecting parts of cylinder blocks and cylinder heads, rocker cover gaskets attached to connecting parts of rocker covers and cylinder heads, oil pan gaskets attached to connecting parts of oil pans and cylinder blocks or transmission cases, gaskets for fuel cell separators attached between a pair of housings sandwiching a unit cell provided with anode, electrolyte plates, and cathodes, gaskets for top covers of hard disk drives, and other various types of gaskets; printing rolls, ironmaking rolls, papermaking rolls, industrial rolls, office equipment rolls, and other various types of rolls; flat belts (film core flat belts, cord flat belts, maltilayer flat belts, single piece flat belts, etc.), V-belts (wrapped V-belts, low edge V-belts, etc.), V-ribbed belts (single V-ribbed belts, double V-ribbed belts, wrapped V-ribbed belts, back surface rubber V-ribbed belts, top cog V-ribbed belts etc.), CVT belts, timing belts, toothed belts, conveyor belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flowlines, and other various types of hoses; CVJ boots, propeller shaft boots, constant velocity joint boots, rack and pinion boots, and other various types of boots; cushion materials, dynamic dampers, rubber couplings, air springs, vibration proofing materials, and other damping material rubber parts; dust covers, car interior members, tires, covered cables, shoe soles, electromagnetic wave shields, binders for flexible printed circuit boards and other binders, fuel cell separators, and also other broad applications in the fields of cosmetics and pharmaceuticals, fields in contact with food, the electronics field, etc. Among these as well, the cross-linked rubber of the present invention can be suitably used for belts, hoses, or sealing members, particularly used for sealing members.

## EXAMPLES

Below, the present invention will be exampled based on further detailed examples, but the present invention is not limited to these examples. Note that, below, unless particularly indicated, "parts" are based on weight. The testing and evaluation were as follows.

Composition of Carboxyl Group-Containing (Highly Saturated) Nitrile Rubber

The ratios of content of the monomer units which form the carboxyl group-containing (highly saturated) nitrile rubber were measured by the following method.

That is, the ratio of content of the mono n-butyl maleate units was calculated by adding 2-butanone 100 ml, ethanol 20 ml, and water 10 ml to 2 mm square carboxyl group-containing nitrile rubber 0.2 g, stirring while using a 0.02N hydrous ethanol solution of potassium hydroxide for titration at room temperature by Thymolphthalein as an indicator to thereby find the number of moles of the carboxyl groups with resepct to the carboxyl group-containing nitrile rubber 100 g, and converting the number of moles which were found to the amount of mono n-butyl maleate units.

The ratio of content of the 1,3-butadiene units was calculated by using the carboxyl group-containing nitrile rubber to measure the iodine value before the hydrogen addition reaction (according to JIS K 6235).

The ratio of content of the acrylonitrile units was calculated in accordance with JIS K6383 by using the Kjeldahl method to measure the nitrogen content in the carboxyl group-containing nitrile rubber.

The ratio of content of methoxyethyl acrylate units was calculated as the remaining ingredients with respect to the monomer units.

Iodine Value

The carboxyl group-containing (highly saturated) nitrile rubber was measured for iodine value in accordance with JIS K 6235.

Mooney Viscosity (Polymer Mooney Viscosity and Compound Mooney Viscosity)

The Mooney viscosities of the carboxyl group-containing (highly saturated) nitrile rubber and cross-linkable rubber composition (polymer Mooney viscosity and Compound Mooney viscosity) were measured in accordance with JIS K6300-1 (units: $ML_{1+4}$, 100°C).

Normal Physical properties (Elongation, 50% Tensile Stress, and Hardness)

The cross-linkable rubber composition was placed in a vertical 15 cm, horizontal 15 cm, depth 0.2 cm mold and press formed while applying a press pressure of 10 MPa at 170°C for 20 minutes to obtain sheet-shaped primary cross-linked product. Next, the obtained primary cross-linked product was transferred to a gear type oven and secondarily cross-linked at 170°C for 4 hours. The obtained sheet-shaped cross-linked rubber was punched out using a No. 3 dumbbell to prepare a test piece. Further, the obtained test piece was used in accordance with JIS K6251 to measure the cross-linked rubber for elongation at break and 50% tensile stress and further in accordance with JIS K6253 using a Durometer Hardness Tester (Type A) to measure the cross-linked rubber for hardness.

O-Ring Compression Set Test

Using an inside diameter 30 mm, ring diameter 3 mm mold, the cross-linkable rubber composition was cross-linked at 170°C for 20 minutes under conditions of a press pressure of 10 MPa and was secondarily cross-linked at 170°C for 4 hours for secondary cross-linking to thereby obtain an O-ring shaped test piece. Further, using the obtained O-ring shaped test piece, the O-ring compression set was measured in accordance with JIS K6262 under conditions holding the piece at 150°C for 168 hours in a state with the distance between the two flat surfaces which sandwich the O-ring shaped test piece compressed 25% in the ring thickness direction. The smaller this value, the better the compression set resistance.

Lubricating Oil Resistance Immersion Test (IRM901 and IRM903)

In the same way as the above-mentioned evaluation of normal physical properties, the cross-linkable rubber composition was cross-linked by primary and secondary cross-linking to obtain a sheet shaped cross-linked rubber. The obtained cross-linked rubber was punched to a 30 mm×20 mm×2 mm size to obtain a test piece. Further, the obtained test piece was immersed in test use lubricating oil (IRM901 and IRM903) at 150°C for 72 hours so as to perform a lubricating oil resistance immersion test. Note that in the lubricating oil resistance immersion test, the volume swelling degree $\Delta V$ after immersion (units: %) was calculated according to the following formula (1). The lubricating oil resistance was judged better the closer to zero the volume swelling degree $\Delta V$ after immersion.

$$\text{Volume swelling degree } \Delta V \text{ after immersion (units: \%)} = ([\text{Volume after immersion in oil} - \text{volume before immersion in oil}]/\text{Volume before immersion in oil}) \times 100 \cdots (1)$$

Note that the test lubricating oil IRM901 is a test use low-swell oil prescribed by JIS K6258 and has the properties of an aniline point of 124°C, an ignition point of 243°C or more, and a density of 0.886 g/cm$^3$. Further, the test lubricating oil IRM903 is the high-swell oil for test use prescribed in JIS K6258 and has the properties of an aniline point of 70°C, an ignition point of 163°C or more, and a density of 0.921 g/cm$^3$.

Fuel Oil Resistance Immersion Test (Toluene/Isooctane= 50/50)

In the same way as the above-mentioned evaluation of normal physical properties, the cross-linkable rubber composition was cross-linked by primary and secondary cross-linking to obtain a sheet shaped cross-linked rubber. The obtained cross-linked rubber was punched to a 30 mm×20 mm×2 mm size to obtain a test piece. Further, the obtained test piece was immersed in toluene/isooctane=50/50 (volume ratio) fuel oil (Fuel-C) at 40°C for 168 hours so as to perform a fuel oil resistance immersion test. Note that in the fuel oil resistance immersion test as well, in the same way as the above-mentioned lubricating oil resistance immersion test, the volume swelling degree $\Delta V$ (units: %) after immersion was calculated. The fuel oil resistance was judged better the closer to zero the volume swelling degree $\Delta V$ after immersion.

Synthesis Example 1

A metal bottle was charged with ion exchanged water 180 parts, a concentration 10 wt% sodium dodecylbenzene sulfonate aqueous solution 25 parts, acrylonitrile 23 parts, mono-n-butyl maleate 6.5 parts, methoxyethyl acrylate 30.5 parts, and t-dodecyl mercaptan (molecular weight adjuster) 0.5 part in that order. The inside gas was replaced with nitrogen three times, then 1,3-butadiene 40 parts was charged. The metal bottle was held at 5°C, cumen hydroperoxide (polymerization initiator) 0.1 part was charged, then the metal bottle was made to rotate while causing a polymerization reaction for 16 hours. Next, a concentration 10 wt% hydroquinone aqueous solution (polymerization terminator) 0.1 part was added to stop the polymerization reaction, then a water temperature 60°C rotary evaporator was used to remove the residual monomer to obtain a latex (L1) of a carboxyl group-containing nitrile rubber (solid content concentration approximately 30 wt%) of acrylonitrile units 23.3 wt%, mono-n-butyl maleate units 6.3 wt%, methoxyethyl acrylate units 24.4 wt%, and butadiene units 46.0 wt%.

Next, to make a content of palladium of 1,000 ppm to the dry weight of the rubber contained in the above obtained latex (L1), an autoclave is charged with the above produced latex and palladium catalyst (solution of 1 wt% palladium acetate acetone solution and equal volume of ion exchanged water) and a hydrogenation reaction is performed at a hydrogen pressure of 3 MPa and temperature of 50°C for 6 hours to obtain a latex (L2) of carboxyl group-containing highly saturated nitrile rubber.

The obtained latex (L2) of the carboxyl group-containing highly saturated nitrile rubber was coagulated by the addition of two times the volume of methanol, then was dried in vacuo at 60°C for 12 hours to thereby obtain a carboxyl group-containing highly saturated nitrile rubber (A1). The obtained carboxyl group-containing highly saturated nitrile rubber (A1) had an iodine value of 6 and a polymer Mooney viscosity ($ML_{1+4}$, 100°C) of 48. Further, the ratios of content of the monomer units forming the obtained carboxyl group-containing highly saturated nitrile rubber (A1) were acrylonitrile units 23.3 wt%, mono-n-butyl maleate units 6.3 wt%, methoxyethyl acrylate units 24.4 wt%, 1,3-butadiene units (including also hydrogenated parts) 46.0 wt%.

Example 1

Using a Banbury mixer, to carboxyl group-containing high saturated nitrile rubber (A1) obtained in Synthesis Example 1, 100 parts, bituminous coal (product name "Austin Black 325", made by Coal Fillers, carbon purity 77.0%, volume average particle size 6 μm, specific gravity 1.31) 100 parts, tri-(2-ethylhexyl) trimellitate (product name "ADK Cizer C-8", made by ADEKA, plasticizer) 30 parts, 4,4'-di-(α,α-dimethylbenzyl)diphenylamine (product name "Nocrac CD", made by Ouchi Shinko Chemical Industrial, antiaging agent) 1.5 parts, stearic acid 1 part, and polyoxyethylenestearyl ether phosphoric acid (product name "Phosphanol RL-210", made by Toho Chemical Industry, processing aid) 1 part were added and kneaded, then the mixture was transferred to rolls where hexamethylenediamine carbamate (product name "Diak#1", made by Dupont-Dow Elastomer, polyamine-based cross-linking agent) 2.4 parts and 1,3-di-o-tolylguanidine (product name "Noccelar DT", made by Ouchi Shinko Chemical Industrial, cross-linking accelerator) 2 parts were added and kneaded in to prepare a cross-linkable rubber composition.

Then, by the above-mentioned method, the prepared cross-linkable rubber composition was used to obtain a cross-linked rubber. The obtained cross-linked rubber was evaluated and tested by normal physical properties, O-ring compression set, lubricating oil resistance immersion tests (IRM901, IRM903) and fuel oil resistance immersion test (toluene/isooctane=50/50). The results are shown in Table 1.

Example 2

Except for changing the amount of bituminous coal from 100 parts to 120 parts, the same procedure was followed as in Example 1 to prepare a cross-linkable rubber composition and cross-linked rubber and the same procedure was followed as in Example 1 to evaluate them. The results are shown in Table 1.

Comparative Example 1

Except for using, instead of bituminous coal 100 parts, MT carbon (product name "Thermax N990", made by Cancarb, carbon black, carbon purity 99% or more, volume average particle size 0.45 μm, specific gravity 1.8) 120 parts, the same procedure was followed as in Example 1 to prepare a cross-linkable rubber composition and cross-linked rubber and the same procedure was followed as in Example 1 to evaluate them. The results are shown in Table 1.

Comparative Example 2

Except for using, instead of bituminous coal 100 parts, calcium carbonate (product name "Hakuenka CC", made by Shiraishi Kogyo, volume average particle size 0.05 μm, specific gravity 2.6) 160 parts, the same procedure was followed as in Example 1 to prepare a cross-linkable rubber composition and cross-linked rubber and the same procedure was followed as in Example 1 to evaluate them. The results are shown in Table 1.

Comparative Example 3

Except for using, instead of bituminous coal 100 parts, FEF carbon (product name "Seast SO", made by Tokai Carbon, carbon black, carbon purity 99% or more, volume average particle size 0.043 μm, specific gravity 2) 40 parts and changing the amount of plasticizer from 30 parts to 5 parts and changing the amount of hexamethylenediamine carbamate from 2.4 parts to 2.7 parts, the same procedure was followed as in Example 1 to prepare a cross-linkable rubber composition and cross-linked rubber and the same procedure was followed as in Example 1 to evaluate them. The results are shown in Table 1.

Comparative Example 4

Except for using, instead of the carboxyl group-containing highly saturated nitrile rubber (A1) 100 parts, hydrogenated acrylonitrile-butadiene copolymer rubber (product name "Zetpol 2020", made by Zeon Corporation, acrylonitrile monomer units content 36 wt%, iodine value 28, Mooney viscosity ($ML_{1+4}$, 100°C) 78) 100 parts and using, instead of hexamethylene diamine carbamate 2.7 parts and 1,3-di-o-tolylguanidine 2 parts, 1,3-bis(t-butylperoxyisopropyl)benzene (product name "Vulcup 40KE", made by Hercules, organic peroxide cross-linking agent) 8 parts, the same procedure was followed as in Comparative Example 3 to prepare a cross-linkable rubber composition and cross-linked rubber and the same procedure was followed as in Example 1 to evaluate them. The results are shown in Table 1.

Table 1

Table 1

|  | | Example | | Comparative Example | | | |
| --- | --- | --- | --- | --- | --- | --- | --- |
|  | | 1 | 2 | 1 | 2 | 3 | 4 |
| Formulation of cross-linkable rubber composition | | | | | | | |
| Carboxyl group-containing highly saturated nitrile rubber | (parts) | 100 | 100 | 100 | 100 | 100 | |
| Hydrogenated acrylonitrile-butadiene copolymer rubber | (parts) | | | | | | 100 |
| Bituminous coal (Austin Black) | (parts) | 100 | 120 | | | | |
| Carbon black (MT Carbon) | (parts) | | | 120 | | | |
| Carbon black (FEF Carbon) | (parts) | | | | | 40 | 40 |
| Calcium carbonate | (parts) | | | | 160 | | |
| Tri-2-ethylhexyl trimellitate | (parts) | 30 | 30 | 30 | 30 | 5 | 5 |
| 4.4'-di-($\alpha,\alpha$-dimethylbenzyl)diphenylamine | (parts) | 1.5 | 1.5 | 1.5 | 1.5 | 1.5 | 1.5 |
| Stearic acid | (parts) | 1 | 1 | 1 | 1 | 1 | 1 |
| Polyoxyethylenestearyl ether phosphoric acid | (parts) | 1 | 1 | 1 | 1 | 1 | 1 |
| Hexamethylenediamine carbamate | (parts) | 2.4 | 2.4 | 2.4 | 2.4 | 2.7 | |
| 1,3'-di-o-tolylguanidine | (parts) | 2 | 2 | 2 | 2 | 2 | |
| 1,3-bis(t-butylperoxyisopropyl)benzene | (parts) | | | | | | 8 |
| Properties of cross-linkable rubber composition | | | | | | | |
| Compound Mooney viscosity (ML1+4, 100°C) | | 66 | 72 | 44 | 43 | 80 | 81 |
| Properties of cross-linked rubber | | | | | | | |
| Elongation | (%) | 260 | 250 | 260 | 350 | 200 | 200 |
| 50% tensile stress | (MPa) | 2.6 | 2.7 | 1.9 | 1.8 | 2.3 | 3.3 |
| Hardness | (Duro-A) | 73 | 75 | 66 | 68 | 70 | 71 |
| O-ring compression set | (%) | 34.3 | 34.5 | 36.4 | 63.6 | 37.4 | 78.0 |
| Lubricating oil resistance immersion test (IRM901, rate of change $\Delta$ V) | (%) | -9 | -8 | -15 | -13 | -1 | 0 |
| Lubricating oil resistance immersion test (IRM903, rate of change $\Delta$ V) | (%) | +2 | +2 | -5 | -3 | +13 | +14 |
| Fuel oil resistance immersion test (toluene/ isooctane, rate of change $\Delta$ V) | (%) | +31 | +29 | +29 | +30 | +57 | +50 |

From Table 1, a cross-linked rubber which is obtained using a rubber composition comprising a carboxyl group-containing nitrile rubber (A) with an iodine value of 120 or less into which bituminous coal (B) is mixed is excellent in normal physical properties (elongation, 50% tensile stress, and hardness) and superior in compression set resistance, lubricating oil resistance, and fuel oil resistance. In particular, it is good in lubricating oil resistance in both the case of use of a test lubricating oil constituted by IRM901 (low-swell oil) and the case of use of IRM903 (high-swell oil) (Examples 1 and 2) .

On the other hand, when using MT carbon instead of bituminous coal (B), the obtained cross-linked rubber is inferior in lubricating oil resistance (in particular, lubricating oil resistance with respect to IRM901 and IRM903) (Comparative Example 1).

Further, when using calcium carbonate instead of bituminous coal (B), the obtained cross-linked rubber is inferior in compression set resistance and lubricating oil resistance (in particular, lubricating oil resistance with respect to IRM901) (Comparative Example 2).

Alternatively, when using FEF carbon instead of bituminous coal (B), the obtained cross-linked rubber is inferior in lubricating oil resistance (in particular, lubricating oil resistance with respect to IRM903) and fuel oil resistance (Comparative Example 3).

Furthermore, when using hydrogenated acrylonitrile-butadiene copolymer rubber instead of a carboxyl group-containing nitrile rubber (A) with an iodine value of 120 or less and using FEF carbon instead of bituminous coal (B), the obtained cross-linked rubber is inferior in compression set resistance and is inferior in lubricating oil resistance (in particular, lubricating oil resistance with respect to IRM903) and fuel oil resistance (Comparative Example 4).

## Claims

1. A nitrile rubber composition containing a carboxyl group-containing nitrile rubber (A) with an iodine value of 120 or less and bituminous coal (B), the iodine value being measured in accordance with JIS K 6235.

2. The nitrile rubber composition according to claim 1 wherein the bituminous coal (B) has a carbon purity of 60 to 95 wt%, the carbon purity being found by measurement of volatiles based on ASTM D3175.

3. The nitrile rubber composition according to claim 1 or 2 wherein the bituminous coal (B) has a volume average particle size of 2 to 10 $\mu$m.

4. The nitrile rubber composition according to any one of claims 1 to 3 wherein the carboxyl group-containing nitrile rubber (A) contains $\alpha,\beta$-ethylenically unsaturated nitrile monomer units, carboxyl group-containing monomer units, conjugated diene monomer units, and (meth)acrylic acid alkoxyalkyl ester monomer units.

5. The nitrile rubber composition according to any one of claims 1 to 4 wherein an amount of the bituminous coal (B) with respect to 100 parts by weight of the carboxyl group-containing nitrile rubber (A) is 50 to 300 parts by weight.

6. A cross-linkable rubber composition containing the nitrile rubber composition according to any one of claims 1 to 5 in which a cross-linking agent (C) is mixed.

7. The cross-linkable rubber composition according to claim 6 wherein the cross-linking agent (C) is a polyamine cross-linking agent.

8. The cross-linkable rubber composition according to claim 6 or 7 further containing a basic cross-linking accelerator.

9. The cross-linkable rubber composition according to any one of claims 6 to 8 further containing a plasticizer.

10. A cross-linked rubber obtained by cross-linking the cross-linkable rubber composition according to any of claims 6 to 9.

11. A cross-linked rubber according to claim 10 which is a seal member.

## Patentansprüche

1. Nitrilkautschukzusammensetzung, die einen Carboxylgruppen enthaltenden Nitrilkautschuk (A) mit einer Iodzahl von 120 oder weniger und Steinkohle (B) enthält, wobei die Iodzahl gemäß JIS K 6235 gemessen wird.

2. Nitrilkautschukzusammensetzung gemäß Anspruch 1, wobei die Steinkohle (B) eine Kohlenstoffreinheit von 60 bis 95 Gew.-% hat, wobei die Kohlenstoffeinheit durch Messung von flüchtigen Bestandteilen auf der Basis von ASTM D3175 gefunden wird.

3. Nitrilkautschukzusammensetzung gemäß Anspruch 1 oder 2, wobei die Steinkohle (B) eine volumendurchschnittliche Partikelgröße von 2 bis 10 $\mu$m hat.

4. Nitrilkautschukzusammensetzung gemäß einem der Ansprüche 1 bis 3, wobei der Carboxylgruppen enthaltende Nitrilkautschuk (A) $\alpha,\beta$-ethylenisch ungesättigte Nitrilmonomereinheiten, Carboxylgruppe enthaltende Monomereinheiten, konjugierte Dienmonomereinheiten und (Meth)acrylsäurealkoxyalkylestermonomereinheiten enthält.

5. Nitrilkautschukzusammensetzung gemäß einem der Ansprüche 1 bis 4, wobei die Menge der Steinkohle (B) bezüglich 100 Gewichtsteilen des Carboxylgruppen enthaltenden Nitrilkautschuks (A) 50 bis 300 Gewichtsteile ist.

6. Vernetzbare Kautschukzusammensetzung, die die Nitrilkautschukzusammensetzung gemäß einem der Ansprüche 1 bis 5 enthält, in welcher ein Vernetzungsmittel (C) eingemischt ist.

7. Vernetzbare Kautschukzusammensetzung gemäß Anspruch 6, wobei das Vernetzungsmittel (C) ein Polyamin-Vernetzungsmittel ist.

8. Vernetzbare Kautschukzusammensetzung gemäß Anspruch 6 oder 7, die außerdem einen basischen Vernetzungsbeschleuniger enthält.

9. Vernetzbare Kautschukzusammensetzung gemäß einem der Ansprüche 6 bis 8, die außerdem einen Weichmacher enthält.

10. Vernetzter Kautschuk, erhalten durch Vernetzung der vernetzbaren Kautschukzusammensetzung gemäß einem der Ansprüche 6 bis 9.

11. Vernetzter Kautschuk gemäß Anspruch 10, der ein Dichtungselement ist.


**Revendications**

1. Composition de caoutchouc nitrile contenant un caoutchouc nitrile contenant des groupes carboxyle (A) avec un indice d'iode inférieur ou égal à 120 et du charbon bitumineux (B), l'indice d'iode étant mesuré conformément à la norme JIS K 6235.

2. Composition de caoutchouc nitrile selon la revendication 1, dans laquelle le charbon bitumineux (B) a une pureté en carbone de 60 à 95 % en poids, la pureté en carbone étant trouvée par la mesure des volatiles sur la base de la norme ASTM D3175.

3. Composition de caoutchouc nitrile selon la revendication 1 ou 2, dans laquelle le charbon bitumineux (B) a une taille volumique moyenne de particule de 2 à 10 $\mu$m.

4. Composition de caoutchouc nitrile selon l'une quelconque des revendications 1 à 3, dans laquelle le caoutchouc nitrile contenant des groupes carboxyle (A) contient des unités de monomère nitrile de $\alpha, \beta$ éthyléniquement insaturées, des unités de monomère contenant des groupes carboxyle, des unités de monomère diène conjugué et des unités de monomère d'ester alcoxyalkylique d'acide (méth)acrylique.

5. Composition de caoutchouc nitrile selon l'une quelconque des revendications 1 à 4, dans laquelle une quantité de charbon bitumineux (B) par rapport à 100 parties en poids du caoutchouc nitrile contenant des groupes carboxyle (A) est de 50 à 300 parties en poids.

6. Composition de caoutchouc réticulable contenant la composition de caoutchouc nitrile selon l'une quelconque des revendications 1 à 5, dans laquelle un agent de réticulation (C) est mélangé.

7. Composition de caoutchouc réticulable selon la revendication 6, dans laquelle l'agent de réticulation (C) est un agent de réticulation de polyamine.

**8.** Composition de caoutchouc réticulable selon la revendication 6 ou 7 contenant en outre un accélérateur de réticulation basique.

**9.** Composition de caoutchouc réticulable selon l'une quelconque des revendications 6 à 8, contenant en outre un plastifiant.

**10.** Caoutchouc réticulé obtenu par réticulation de la composition de caoutchouc réticulable selon l'une quelconque des revendications 6 à 9.

**11.** Caoutchouc réticulé selon la revendication 10, qui est un élément d'étanchéité.

**EP 2 990 438 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001055471 A
- EP 2161301 A1
- WO 2012133618 A1